# EUROPEAN PATENT APPLICATION

(11) **EP 4 579 916 A1**
(43) Date of publication of application: **02.07.2025**
(21) Application number: 24199911.9
(22) Date of filing: 12.09.2024
(51) Int. Cl.: H01M 50/358, H01M 50/204, H01M 50/325

(54) **ENERGY STORAGE DEVICE AND ENERGY STORAGE SYSTEM**

(30) Priority: 27.12.2023 CN 202323624387 U; 05.02.2024 WO PCT/CN2024/076077
(71) Applicant: Eve Energy Storage Co., Ltd., Wuhan Hubei 430074 (CN)
(72) Inventor: FAN, Shilin, Wuhan, Hubei, 430074 (CN); DING, Hongtao, Wuhan, Hubei, 430074 (CN); ZHANG, Han, Wuhan, Hubei, 430074 (CN); FENG, Zhaojun, Wuhan, Hubei, 430074 (CN)
(74) Representative: Murgitroyd & Company

(57) **Abstract**

The present application provides an energy storage device and an energy storage system. The energy storage device includes a battery rack; a battery pack disposed on the battery rack, where each battery pack includes a housing and a pressure relief valve disposed on the housing, a side of the housing is disposed with a through hole; a gas collecting component including a ventilation pipe and a gas extracting apparatus, where the ventilation pipe is connected to the housing of each battery pack and covers the pressure relief valve, the gas extracting apparatus is configured to discharge gas discharged from the battery pack into the ventilation pipe after the pressure relief valve is opened.

## Description

### TECHNICAL FIELD

The present application relates to a technical field of batteries, and more particularly, to an energy storage device and an energy storage system.

### SUMMARY

With increasing application fields of new energy battery systems such as ships, energy storage devices, and commercial vehicles, the treatment for harmful gas caused by the bursting of a pressure relief valve when the battery system triggers a thermal runaway, is a key in evaluating whether the battery system is well designed. In the related art, the battery pack directly discharges gas into a battery compartment in which the battery pack is located after the battery system is out of control due to the battery system triggering the thermal runaway. A measuring device for monitoring the concentration of harmful gas in the compartment gas is added within the battery compartment, a current concentration value of the harmful gas is determined, and the harmful gas is directly discharged into the compartment when the concentration of the harmful gas in the compartment is too high to discharge the gas in the compartment effectively and quickly.

Some embodiments of the present application provide an energy storage device and an energy storage system, in which gas discharged from respective battery packs is centralizedly processed through a ventilation pipe, and then rapidly discharged through a gas extracting apparatus, to avoid the accumulation of the harmful gas in a cabin.

In a first aspect, some embodiments of the present application provide an energy storage device including:
at least one battery rack;
at least one battery pack disposed on the battery rack, wherein each of the battery packs includes a housing and a pressure relief valve disposed on the housing, a side of the housing is disposed with a through hole, the pressure relief valve covers the through hole, and the housing and the pressure relief valve cooperate to form a closed space inside the battery pack; and
a gas collecting component including a ventilation pipe and a gas extracting apparatus, wherein the gas extracting apparatus is in communication with an inside of the ventilation pipe, the ventilation pipe is connected to the housing of each of the at least one battery pack and covers the pressure relief valve, and the gas extracting apparatus is configured to discharge gas discharged from the battery pack into the ventilation pipe, after the pressure relief valve is opened.

In a second aspect, some embodiments of the present application provide an energy storage system including an energy storage cabinet and the energy storage device according to any one of the above, the energy storage device is disposed within the energy storage cabinet.

### Beneficial effect

In some embodiments of the present application, the ventilation pipe is in communication with all the battery packs in the energy storage device, and the gas extracting apparatus is in communication with the inside of the ventilation pipe, so that the gas discharged from respective battery packs is centralizedly processed through the ventilation pipe, and then rapidly discharged through the gas extracting apparatus, to avoid the accumulation of the harmful gas in the cabin.

### BRIEF DESCRIPTION OF THE DRAWINGS

FIG. 1 is an axial side schematic view of an energy storage device according to some embodiments of the present application;
FIG. 2 is an axial side schematic view of a battery pack according to some embodiments of the present application;
FIG. 3 is an axial side schematic view of a ventilation pipe according to some embodiments of the present application;
FIG. 4 is an axial side schematic view of a ventilation pipe according to some embodiments of the present application;
FIG. 5 is a schematic diagram of a power supply circuit of a gas extracting apparatus according to some embodiments of the present application; and
FIG. 6 is an axial side schematic view of a battery rack according to some embodiments of the present application.

### Reference numerals

1. Battery rack; 11. Frame body; 12. Support plate; 13. Limit structure; 2. Battery pack; 21. Housing; 22. Pressure relief valve; 3. Gas collecting component; 31. Ventilation pipe; 311. Main pipe; 312. Branch pipe; 3121. Connection portion; 32. Gas extracting apparatus; 4. Battery management system; 41. Power supply; 42. Relay; 5. Emergency control power supply.

### DETAILED DESCRIPTION OF EMBODIMENTS

In the present application, unless stated to the contrary, directional terms such as "up" and "down" are generally used to refer to orientations or position relationships such as "up" and "down" of the apparatus in its actual use or working condition, specifically the direction of the drawing in the accompanying drawings, while "inside" and "outside" are used with reference to the contour of the apparatus.

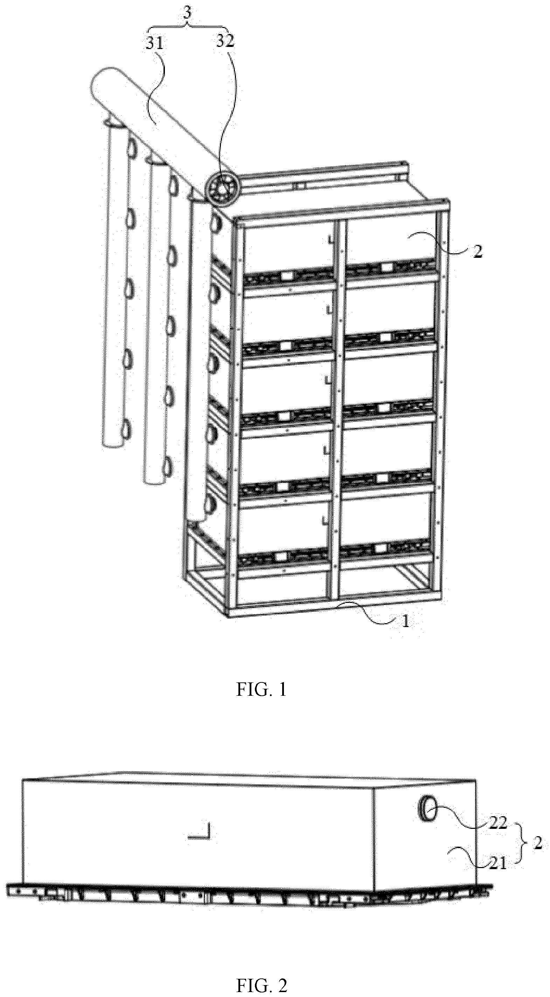

As shown in FIGS. 1 and 2, the present application discloses an energy storage device including at least one battery rack 1, at least one battery pack 2, and a gas collecting component 3. The battery pack 2 is disposed on the battery rack 1, and the number of the battery racks 1 included in the energy storage device and the number of the battery packs 2 placed on each battery rack 1 depend on the setting requirements of the energy storage device. The present embodiment is not specifically limited hereto.

Each battery pack 2 includes a housing 21 and a pressure relief valve 22 disposed on the housing 21. A through hole (not shown) is disposed at a side of the housing 21. The inside of the housing 21 is in communication with the outside of the housing 21 through the through hole. Gas generated in the housing 21 is discharged to the outside of the battery pack 2 through the through hole. The pressure relief valve 22 is hooded over the through hole, the pressure relief valve 22 covers the through hole, and a part of the area of the pressure relief valve 22 is in contact with the housing 21, so that the housing 21 and the pressure relief valve 22 cooperate to form a closed space inside the battery pack 2. In order to ensure the sealability of the battery pack 2, a sealing member such as foam or sealant is disposed at the connection of the pressure relief valve 22 and the housing 21. The pressure relief valve 22 and the housing 21 are connected by, but is not limited to, a fastener such as a screw and a bolt, a thread, or the like.

When the battery pack 2 triggers the thermal runaway, the pressure in the battery pack 2 is increased due to the heat generated by a battery core in the battery pack 2 and the valve explosion due to the battery core, and pressure in the battery pack 2 increases, and when the pressure reaches a pressure limit value that the housing 21 of the battery pack 2 can bear, the pressure relief valve22 is blown open, so that the through hole on the housing 21 is exposed, and the gas in the battery pack 2 due to the thermal runaway is discharged from the battery pack 2 through the through hole on the housing 21 for pressure relief.

The gas collecting component 3 includes a ventilation pipe 31 and a gas extracting apparatus 32. The ventilation pipe 31 is connected to the housing 21 of each battery pack 2 and covers the pressure relief valve 22. After any battery pack 2 triggers the thermal runaway so that the pressure relief valve 22 is burst, the gas in the battery pack 2 is discharged into the ventilation pipe 31. The gas extracting apparatus 32 is in communication with the inside of the ventilation pipe 31, and the gas extracting apparatus 32 assists in discharging the gas, which is discharged from the battery pack 2 into the ventilation pipe 31.

In addition, a gas treatment apparatus (not shown) may be added in the ventilation pipe 31 to treat the gas discharged from the battery pack 2 to the ventilation pipe 31, for example, filter dust, filter harmful gas, or the like, to avoid polluting the environment by discharging the gas directly to the outside world. The gas extracting apparatus 32 may be provided as an exhaust fan.

In the present embodiment, the ventilation pipe 31 is in communication with all the battery packs 2 in the energy storage device, and the ventilation pipe 31 centralizedly processes the gas discharged from each battery pack 2, and then rapidly discharges the gas through the gas extracting apparatus 32, thereby avoiding the accumulation of the harmful gas in the compartment.

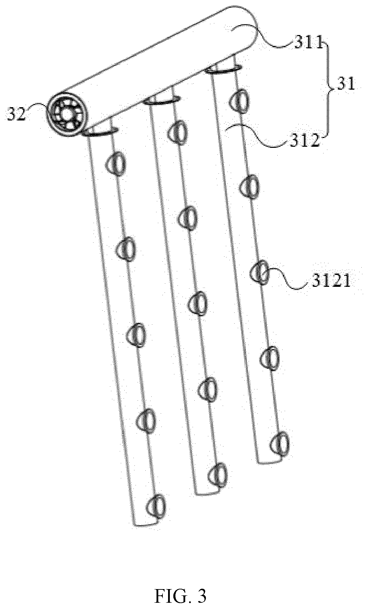

In some embodiments, as shown in FIG. 3, the ventilation pipe 31 includes a main pipe 311 and at least one branch pipe 312, each branch pipe 312 is in communication with the main pipe 311, and each branch pipe 312 is connected to at least one battery pack 2. Therefore, when the battery pack 2 triggers the thermal runaway, the gas in each battery pack 2 enters the main pipe 311 through the branch pipe 312 for the centralized processing. The gas extracting apparatus 32 is in communication with the inside of the main pipe 311, and the gas extracting apparatus 32 assists in the rapid discharge of the gas in the main pipe 311.

The number of the branch pipes 312 included in the ventilation pipe 31 is not limited hereto, the number of the battery packs 2 to which each branch pipe 312 is connected is not limited hereto, and the number of the corresponding battery packs 2 and the battery rack 1 on which the battery packs 2 are placed may be adjusted as required. The cross section of the main pipe 311 and the branch pipe 312 may be any shape, such as a circle or a rectangle, and the present embodiment is not specifically limited.

In the case that the branch pipe 312 is connected to only one battery pack 2. An end of the branch pipe 312 is in communication with the inside of the main pipe 311, and the other end of the branch pipe 312 is connected to the pressure relief valve 22 of the battery pack 2. The other end of the branch pipe 312 is hooded over the pressure relief valve 22. In order to ensure the sealability of the connection between the branch pipe 312 and the pressure relief valve 22 of the battery pack 2, a sealing member such as foam or sealant is provided at the connection between the pressure relief valve 22 and the branch pipe 312. The pressure relief valve 22 and the branch pipe 312 are connected by, but is not limited to, a fastener such as a screw and a bolt, a thread, or the like.

In the case that the branch pipe 312 is connected to the plurality of battery packs 2. An end of the branch pipe 312 is in communication with the inside of the main pipe 311, the other end of the branch pipe 312 is connected to the pressure relief valve 22 of one of battery packs 2, and the branch pipe 312 is further disposed therein with at least one opening connected to the pressure relief valve 22 of the battery pack 2. In order to facilitate connection of the opening provided in the ventilation pipe 31 to the pressure relief valve 22, the branch pipe 312 is disposed with a connection portion 3121, which is hooded over the pressure relief valve 22 of the battery pack 2, and the connection portion 3121 is in communication with the inside of the branch pipe 312 through the opening. In order to ensure the sealability of the connection of the branch pipe 312 and the pressure relief valve 22 of the battery pack 2, a sealing member such as foam or sealant is provided at the connection of the pressure relief valve 22 and the connection 3121. The pressure relief valve 22 and the connection 3121 are connected by, but is not limited to, a fastener such as a screw and a bolt, a thread, or the like. Further, the connection portion 3121 and the branch pipe 312 may be integrally moulded, or may be connected by welding, and the present embodiment is not specifically limited hereto.

In some embodiments, the ventilation pipe 31 includes the main pipe 311 and the branch pipes 312, and the main pipe 311 and the branch pipe 312 are separate components. In order to ensure the sealability of the ventilation pipe 31, the main pipe 311 and the branch pipe 312 are performed the tailored welded connection by welding, or the main pipe 311 and the branch pipe 312 are connected by a fastener such as a screw and a bolt, while a sealing member such as foam or sealant is disposed at the connection of the main pipe 311 and the branch pipe 312.

In some embodiments, at least one branch pipe 312 is integrally moulded with the main pipe 311 such as by using a process such as the cast moulding, to ensure the sealability of the ventilation pipe 31.

In some embodiments, one or more battery packs 2 may be placed on each of battery rack 1, and each of branch pipe 312 may be connected to one or more battery packs 2, so that to facilitate the arrangement of the branch pipe 312, the pressure relief valves 22 of respective ones of the battery packs 2 placed on the same battery rack 1 are in communication with the same branch pipe 312.

In some embodiments, since the ventilation pipe 31 is disposed with an opening mask disposed on the pressure relief valve 22 of the battery pack 2, in order to ensure the sealability of the ventilation pipe 31, a sealing member, including but not limited to foam, sealant, or the like, is provided at the connection of the ventilation pipe 31 and the housing 21 of each battery pack 2.

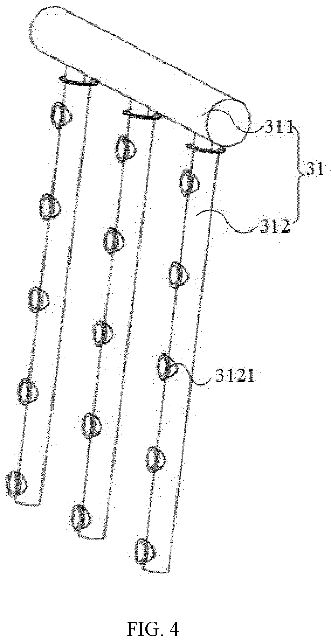

In some embodiments, as shown in FIGS. 3 and 4, the ventilation pipe 31 is disposed with only openings communicating with the pressure relief valve 22 of each battery pack 2 and the gas extracting apparatus 32. A sealing member is disposed at the connection of the ventilation pipe 31 and the pressure relief valve 22 of each battery pack 2. If the ventilation pipe 31 includes the main pipe 311 and the branch pipe 312, the main pipe 311 and the branch pipe 312 are integrally moulded or tailored welded, or a sealing member is disposed at the connection of the main pipe 311 and the branch pipe 312. Therefore, when the ventilation pipe 31 and the battery pack 2 are assembled, the ventilation pipe 31 may discharge the gas to the outside only through the opening in communication with the gas extracting apparatus 32. Therefore, when the gas extracting apparatus 32 is activated, a negative pressure is formed inside the ventilation pipe 31, so that the discharge of the gas in the ventilation pipe 31 may be further accelerated, and when the pressure relief valve 22 of the battery pack 2 is opened, the discharge of the gas in the battery pack 2 may be assisted to be accelerated.

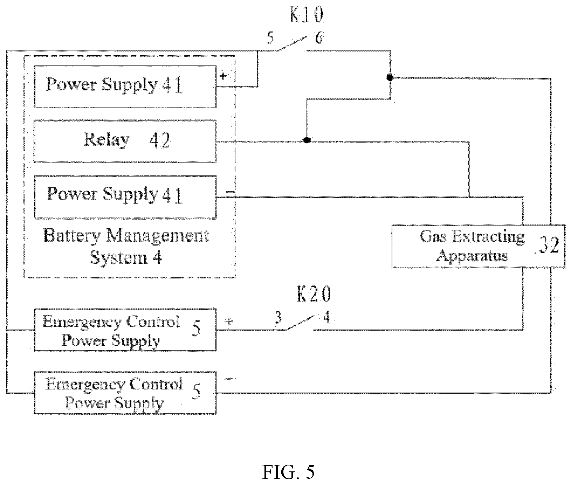

In some embodiments, as shown in FIG. 5, the energy storage device further includes a battery management system 4 connected to each battery pack 2. The battery management system 4 collects and monitors parameters of each battery pack 2. The parameters of the battery pack 2 includes but not limited to temperature, humidity, gas pressure, or the like. The battery management system 4 determines whether each battery pack 2 triggers the thermal runaway by the collected parameters.

The battery management system 4 is further connected to the gas extracting apparatus 32, and the battery management system 4 is arranged to control the turning-on or turning-off of the battery management system 4. Only when the battery pack 2 triggers the thermal runaway, the gas extracting apparatus 32 needs to be turned on to assist in the rapid discharge of the gas in the battery pack 2.

When the battery management system 4 determines that any one of the battery packs 2 triggers the thermal runaway by the collected parameters, the battery management system 4 sends a start command to the gas extracting apparatus 32, to control the start-up of the gas extracting apparatus 32based on the start command, to extract the gas in the ventilation pipe 31.

It should be noted that the battery management system 4 determines by the collected parameters that the battery pack 2 triggers the thermal runaway before the pressure relief valve 22 of the battery pack 2 is opened, so that the battery management system 4 controls to start the gas extracting apparatus 32 to generate a negative pressure in the ventilation pipe 31, so that the harmful gas generated by the battery pack 2 after the bursting is discharged more quickly.

In some embodiments, the battery management system 4 includes a power supply 41 and a relay 42. The power supply 41 is configured to supply power to the gas extracting apparatus 32. The power supply 41 is connected to the gas extracting apparatus 32 through the first switch K10. The relay 42 is connected to the first switch K10. The relay 42 controls the turning-on and turning-off of the first switch K10.

When the battery management system 4 does not issue the start command, the first switch K10 is in the turning-off state and the gas extracting apparatus 32 is in the turning-off state. When the battery management system 4 determines by the collected parameters that the battery pack 2 triggers the thermal runaway, the battery management system 4 issues the start command, the relay 42 controls the first switch K10 to be turned on based on the start command, the power supply 41 supplies power to the gas extracting apparatus 32, the gas extracting apparatus 32 is started, and the gas extracting apparatus 32 assists in discharging the gas in the ventilation pipe 31.

In some embodiments, the energy storage device further includes an emergency control power supply 5 disposed to supply power to the gas extracting apparatus 32. The emergency control power supply 5 is connected to the gas extracting apparatus 32 through the second switch K20, the relay 42 is connected to the second switch K20, and the relay 42 controls the turning-on and turning-off of the second switch K20. The emergency control power supply 5 is connected to the relay 41 through the first switch K 10, that is, after the relay 42 controls the first switch K10 to be turned on based on the start command, the emergency control power supply 5 is disposed to supply power to the relay 42, and the coil of the relay 42 is kept turned on to continue to keep the first switch K10 and the second switch K20 to be turned on.

When the battery management system 4 does not issue the start command, both the first switch K10 and the second switch K20 are in the turning-off state, and the gas extracting apparatus 32 is in the turning-off state. When the battery management system 4 determines by the collected parameters that the battery pack 2 triggers the thermal runaway, the battery management system 4 issues the start command, the relay 42 controls the first switch K10 and the second switch K20 to be turned on based on the start command, the emergency control power supply 5 supplies power to the relay 42 and the gas extracting apparatus 32, the gas extracting apparatus 32 is started, and the gas extracting apparatus 32 assists in discharging the gas in the ventilation pipe 31. When the battery management system 4 is powered down, the first switch K10 and the second switch K20 remain turned on and the gas extracting apparatus 32 continues to operate since the emergency control power supply 5 continues to supply the power to the relay 42. Since the gas extracting apparatus 32 is started only after the thermal runaway is triggered, and an operator is required to perform an overhaul after the thermal runaway, the gas extracting apparatus 32 is disabled and detached during the overhaul by the operator.

That is, the emergency control power supply 5 and the power supply 41 of the battery management system 4 are connected in parallel, and both supply power to the gas extracting apparatus 32 to ensure that the power supply circuit is not stopped when the control signal of the battery management system 4 loses power. In addition, the specific circuit of the emergency control power supply 5 and the power supply 41 of the battery management system 4 is not specifically limited hereto in the present embodiment.

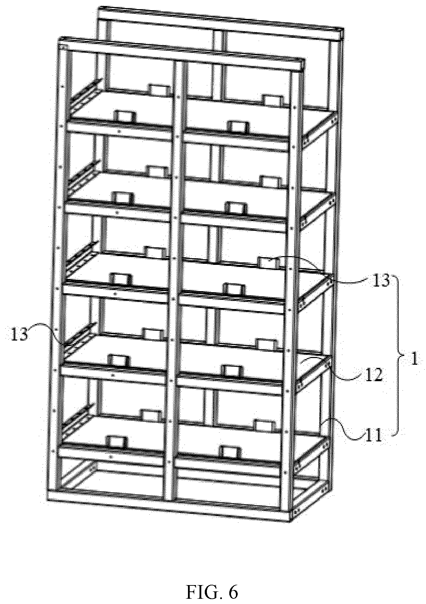

In some embodiments, as shown in FIG. 6, the battery rack 1 includes a frame body 11, at least one support plate 12, and at least one limit structure 13. Each support plate 12 is connected to the frame body 11. The support plate 12 is disposed to support the battery pack 2. When the battery rack 1 includes a plurality of support plates 12, each of the support plates 12 is disposed at intervals, and a space between adjacent support plates 12 is disposed to accommodate the battery pack 2, so that the maximum number of the battery packs 2 placed on the battery rack 1 may be adjusted by providing the support plates 12.

The limit structure 13 is disposed on the support plate 12, and the limit structure 13 is disposed to prevent the battery pack 2 from sliding off the support plate 12, so that the limit structure 13 is disposed at the edge of the surface of the support plate 12 where the battery pack 2 is placed. When the battery rack 1 includes a plurality of support plates 12, each of the support plates 12 is disposed at intervals, and a space between adjacent support plates 12 is disposed for accommodating the battery pack 2. In order to facilitate placement of the battery pack 2, only one side of the surface of the support plates 12 where the battery pack 2 is placed is disposed without the limit structure 13. At a side, disposed with the limit structure 13, of the surface of the support plates 12 where the battery pack 2 is placed, the surface of the battery pack 2 on which the support plate 12 is placed is disposed with a limit structure 13, the limit structure 13 may be a structure in which the edge of the surface of the battery pack 2 on which the support plate 12 is placed integrally extends in a direction in which the battery pack 2 is placed, or the limit structure 13 includes a plurality of baffles of which adjacent baffles are disposed at intervals.

The energy storage device includes same battery racks 1, to facilitate statistical management and reduce costs. Accordingly, when the ventilation pipe 31 includes the main pipe 311 and at least one branch pipe 312, the pressure relief valves 22 of respective battery packs 2 disposed in the same battery rack 1 are connected to the same branch pipe 312, so that respective branch pipes 312 are connected to the battery packs 2 placed on the battery racks 1 of the same structure. Therefore, each branch pipe 312 is disposed to have the same structure. It should be noted that the ventilation pipe 31 further includes a plug (not shown). If an opening disposed in a branch pipe 312 is not connected to the battery pack 2, the plug is sealed on the opening of the branch pipe 312 to avoid air leakage at the opening to which the battery pack 2 is not connected.

Disclosed herein is an energy storage system including an energy storage cabinet and an energy storage device according to any one of the above embodiments. The energy storage device is disposed within the energy storage cabinet.

In some embodiments, the energy storage device includes:
at least one battery rack 1;
at least one battery pack 2 disposed on the battery rack 1, where each battery pack 2 includes a housing 21 and a pressure relief valve 22 disposed on the housing 21, a side of the housing 21 is disposed with a through hole, the pressure relief valve 22 covers the through hole, and the housing 21 and the pressure relief valve 22 cooperate to form a closed space inside the battery pack 2; and
a gas collecting component 3 includes a ventilation pipe 31 and a gas extracting apparatus 32, where the gas extracting apparatus 32 is in communication with an inside of the ventilation pipe 31, and the ventilation pipe 31 is connected to the housing 21 of each battery pack 2 and covers the pressure relief valve 22, and the gas extracting apparatus 32 is configured to discharge gas discharged from the battery pack 2 into the ventilation pipe 31 after the pressure relief valve 22 is opened.

In some embodiments, the ventilation pipe 31 includes a main pipe 311 and at least one branch pipe 312, the at least one branch pipe 312 is in communication with the main pipe 311, each branch pipe 312 is connected to at least one of the battery packs 2, and the gas extracting means 32 is in communication with the main pipe 311.

In some embodiments, the at least one branch pipe 312 is integrally moulded with the main pipe 311.

In some embodiments, the pressure relief valves 22 of respective ones of the battery packs 2 provided on the same battery rack 1 are in communication with the same branch pipe 312.

In some embodiments, a sealing member is disposed at a connection of the ventilation pipe 31 and the housing 21 of each battery pack 2.

In Some embodiments, the ventilation pipe 31 is disposed only with openings in communication with the pressure relief valve 22 and the gas extracting apparatus 32 of each battery pack 2.

In some embodiments, the energy storage device further includes a battery management system 4 connected to each battery pack 2 and the gas extracting apparatus 32, the battery management system 4 being configured to monitor a parameter of each battery pack 2, when the battery management system 4 determines that any of the battery packs 2 triggers a thermal runaway based on the parameter, the battery management system 4 sends a start command to the gas extracting apparatus 32, to control the gas extracting apparatus 32 to be started.

In some embodiments, the battery management system 4 includes a power supply 41 connected to the gas extracting apparatus 32 through a first switch, and a relay 42 configured to control the first switch to be turned on based on the start command of the battery management system 4.

In some embodiments, the energy storage device further includes an emergency control power supply 5 connected to the relay 41 through the first switch, the emergency control power supply 5 is connected to the gas extracting apparatus 32 through a second switch, the relay 42 is configured to control the second switch to be turned on based on the start command of the battery management system 4.

In some embodiments, the battery rack 1 includes a frame body 11, at least one support plate 12, and at least one limit structure 13, each of the at least one support plate 12 is connected to the frame body 11, the support plate 12 is disposed to support the battery pack 2, and the limit structure 13 is disposed at an edge of a surface of the support plate 12 on which the battery pack 2 is placed.

In the above-mentioned embodiments, the description of each embodiment has its own emphasis, and parts not described in detail in a certain embodiment may be referred to the related description of other embodiments.

## Claims

1. An energy storage device, **characterized in that** the energy storage device includes:
at least one battery rack (1);
one or more battery packs (2) disposed on the battery rack (1), wherein each of the battery packs (2) includes a housing (21) and a pressure relief valve (22) disposed on the housing (21), a side of the housing (21) is disposed with a through hole, the pressure relief valve (22) covers the through hole, and the housing (21) and the pressure relief valve (22) cooperate to form a closed space inside the battery pack (2); and
a gas collecting component (3) including a ventilation pipe (31) and a gas extracting apparatus (32), wherein the gas extracting apparatus (32) is in communication with an inside of the ventilation pipe (31), the ventilation pipe (31) is connected to the housing (21) of each of the one or more battery packs (2) and covers the pressure relief valve (22), and the gas extracting apparatus (32) is configured to discharge gas discharged from the battery pack (2) into the ventilation pipe (31), after the pressure relief valve (22) is opened.

2. The energy storage device of claim 1, **characterized in that** the ventilation pipe (31) includes a main pipe (311) and at least one branch pipe (312), the at least one branch pipe (312) is in communication with the main pipe (311), each of the at least one branch pipe (312) is connected to at least one of the one or more battery packs (2), and the gas extracting apparatus (32) is in communication with the main pipe (311).

3. The energy storage device of claim 2, **characterized in that** the at least one branch pipe (312) is integrally moulded with the main pipe (311).

4. The energy storage device of claim 2, **characterized in that** the pressure relief valve (22) of respective ones of the one or more battery packs (2) disposed on a same one of the at least one battery rack (1) is in communication with a same one of the at least one branch pipe (312).

5. The energy storage device of any one of claims 1 to 4, **characterized in that** a sealing member is disposed at a connection of the ventilation pipe (31) and the housing (21) of each of the one or more battery packs (2).

6. The energy storage device of any one of claims 1 to 4, **characterized in that** the ventilation pipe (31) is disposed only with openings in communication with the pressure relief valve (22) and the gas extracting apparatus (32) of each of the one or more battery packs (2).

7. The energy storage device of any one of claims 1 to 4, **characterized in that** the energy storage device further includes a battery management system (4) connected to the gas extracting apparatus (32) and each of the one or more battery packs (2), the battery management system (4) is configured to monitor a parameter of each of the one or more battery packs (2), and when the battery management system (4) determines that any of the one or more battery packs (2) triggers a thermal runaway based on the parameter, the battery management system (4) sends a start command to the gas extracting apparatus (32), to control the gas extracting apparatus (32) to be started.

8. The energy storage device of claim 7, **characterized in that** the battery management system (4) includes a power supply (41) and a relay (42), and the power supply (41) is connected to the gas extracting apparatus (32) through a first switch, and the relay (42) is configured to control the first switch to be turned on based on the start command of the battery management system (4).

9. The energy storage device of claim 8, **characterized in that** the energy storage device further includes an emergency control power supply (5) connected to the relay (42) through the first switch, the emergency control power supply (5) is connected to the gas extracting apparatus (32) through a second switch, and the relay (42) is configured to control the second switch to be turned on based on the start command of the battery management system (4).

10. The energy storage device of any one of claims 1 to 4, **characterized in that** the battery rack (1) includes a frame body (11), at least one support plate (12), and at least one limit structure (13), each of the at least one support plate (12) is connected to the frame body (11), the at least one support plate (12) is disposed to support the battery pack (2), and the limit structure (13) is disposed at an edge of a surface of the support plate (12) on which the battery pack (2) is placed.

11. An energy storage system, **characterized in that** the energy storage system includes an energy storage cabinet and the energy storage device of any one of claims 1 to 10, and the energy storage device is disposed in the energy storage cabinet.
